# EUROPÄISCHE PATENTSCHRIFT

(11) **EP 3 188 199 B1**
(45) Veröffentlichungstag und Bekanntmachung des Hinweises auf die Patenterteilung: **26.01.2022**
(21) Anmeldenummer: 16205895.2
(22) Anmeldetag: 21.12.2016
(51) Int. Cl.: H01F 3/10, H01F 38/14, H01F 3/14

(54) **VORRICHTUNG ZUR BERÜHRUNGSLOSEN ÜBERTRAGUNG ELEKTRISCHER ENERGIE IN EIN BEWEGTES SYSTEM EINER VERSCHIEBEEINRICHTUNG**
DEVICE FOR CONTACTLESS TRANSMISSION OF ELECTRIC ENERGY INTO A MOVING SYSTEM OF A SLIDING DEVICE
DISPOSITIF DE TRANSMISSION SANS CONTACT D'ÉNERGIE ÉLECTRIQUE DANS UN SYSTÈME MOBILE D'UN DISPOSITIF DE DÉPLACEMENT

(30) Priorität: 31.12.2015 EP 15405077
(43) Veröffentlichungstag der Anmeldung: 05.07.2017
(73) Patentinhaber: Schneeberger Holding AG, 4914 Roggwil (CH)
(72) Erfinder: Vix, Martin, 4853 Riken (CH)
(74) Vertreter: EGLI-EUROPEAN PATENT ATTORNEYS

(56) Entgegenhaltungen:
- EP-A1- 2 704 292
- DE-A1- 3 304 719
- DE-A1- 19 545 220
- US-A- 5 737 211
- US-A1- 2008 303 351

## Beschreibung

Die vorliegende Erfindung betrifft eine Vorrichtung zur berührungslosen, induktiven Übertragung elektrischer Energie aus einem ersten, vorzugsweise stationären System einer Verschiebeeinrichtung in ein dazu bewegbares zweites System der Verschiebeeinrichtung. Ferner betrifft die Erfindung eine (Linear-)Verschiebeeinrichtung mit einer solchen Energieübertragungsvorrichtung sowie ein Verfahren zum Betreiben der Energieübertragungsvorrichtung.

Verschiebeeinrichtungen, insbesondere ein- oder mehrdimensionale bzw. ein- oder mehrachsige Linear-Verschiebeeinrichtungen, etwa sogenannte X- oder XY-Verschiebetische, bestehen in der Regel aus einem bzw. mehreren einachsigen (Linear-) Führungssystemen, die das mitunter hochpräzise Bewegen und Positionieren eines Objektes in einer oder mehreren Richtungen ermöglichen. Eine sehr einfache Variante einer eindimensionalen bzw. einachsigen Verschiebeeinrichtung besteht beispielsweise aus einer Führungsschiene, auf der ein Führungswagen längs verschieblich geführt ist. Dabei bildet die Führungsschiene das sogenannte stationäre System der Verschiebereinrichtung, während der längsverschiebbar angeordnete Führungswagen das relativ zum ersten System bewegbare zweite System darstellt. Auf dem Führungswagen, d.h. im bewegbaren zweiten System, können diverse Einrichtungen, beispielsweise Messsysteme, Antriebseinrichtungen, Steuerungs- und Regelungseinrichtungen etc. angeordnet sein, die mit elektrischer Energie versorgt werden müssen. Hierzu werden traditionell kabelgebundene Energieübertragungsvorrichtungen eingesetzt, bei denen etwa ein flexibler Kabelbaum eine Energiequelle in dem stationären ersten System mit einem Energieverbraucher im bewegbaren zweiten System verbindet. Die flexible Ausgestaltung des Kabelbaums erlaubt es dabei, der Relativbewegung des bewegbaren zweiten Systems zu folgen. Häufig wird ein derartiger Kabelbaum jedoch als nachteilig empfunden, weil er beispielsweise bei hochpräzisen Positionieranwendungen, etwa im Bereich der Halbleitertechnologie, mechanische Störungen, beispielsweise Vibrationen, aus dem stationären System in das präzise zu positionierende zweite System übertragen kann.

Zur Vermeidung dieser Problematik werden im Stand der Technik diverse kabellose bzw. sogenannte berührungslose Energieübertragungsvorrichtungen vorgeschlagen, bei denen die elektrische Energie mitunter induktiv nach dem Transformatorprinzip übertragen wird. Eine derartige Vorrichtung ist beispielsweise aus der japanischen Druckschrift JP 6 204 043 A bekannt, die ein lineares Verschiebesystem zur kontaktlosen Energieübertragung beschreibt. Das System besteht aus einem Primärkern und einem Sekundärkern, die jeweils E-förmig ausgebildet und einander gegenüberliegend angeordnet sind, wobei der Sekundärkern gegenüber dem Primärkern entlang einer Längsachse des Primärkerns verschiebbar ist. Zum Zwecke der Energieübertragung sind auf beiden E-Kernen jeweils um deren Mittelstege Primär- bzw. Sekundärwicklungen aufgebracht. Um einen Anstieg der Selbstinduktion innerhalb der Primärspule zu vermeiden, ist der Primärkern entlang seiner Längsachse periodisch segmentiert, indem zwischen magnetisch leitenden Kernabschnitten jeweils Füllsegmente aus einem nicht-magnetischen und nicht-leitenden Material eingebracht sind. Um die gewünschte Reduzierung der Selbstinduktion zu erreichen, muss die Länge des Sekundärkerns in Längsrichtung des Verschiebeweges zwingend einem ganzzahligen Vielfachen der Summe aus den Längen eines Füllsegments und eines magnetisch leitenden Kernabschnitts entsprechen.

Bei der aus der JP 6 204 043 A bekannten Lösung ist aufgrund des segmentierten Aufbaus des Primärkerns die Vorrichtung insgesamt hinsichtlich der übertragbaren Energie begrenzt. Zudem erhöht die erforderliche Mindestlänge des Sekundärkerns entlang der Verschieberichtung die bewegte Gesamtmasse des zweiten Systems, was sich wiederum nachteilig auf die Dynamik des Verschiebesystems auswirken kann.

Aus der Druckschrift DE 195 45 220 A1 ist eine Anordnung zum kontaktlosen Übertragen von Signalen zwischen gegeneinander linear bewegbaren Fahrzeugteilen bekannt. Ein Übertrager weist ineinander beweglich geführte Schalenkern-Schienen mit jeweils einem E-förmigen Profil auf. Die Primärwicklung und die Sekundärwicklung des Übertragers sind jeweils auf die mittleren Querschenkel der E-Profil-Schienen gewickelt. Zwischen den beiden gegeneinander verschieblichen E-Profil-Schienen ist ein Luftspalt ausgebildet, über welchen hinweg die induktive Energieübertagung stattfindet. Bei der bekannten Anordnung soll der Entstehung von Wirbelströmen dadurch entgegengewirkt werden, dass die Schalenkerne mit mehreren in der Längsrichtung der Schalenkerne aufeinanderfolgenden und senkrecht zu der Längsrichtung der Schalenkerne liegenden Einschnitten versehen sind.

Der Luftspalt bei der aus der DE 195 45 220 A1 bekannten Lösung ist vergleichsweise gross; hierdurch kann das magnetische Feld geschwächt werden. Dadurch müssen zur Energieübertragung die Magnete entsprechend grösser gewählt werden, und die Abmessungen sowie das Gewicht der Anordnung nehmen zu.

Aufgabe der vorliegenden Erfindung ist es daher, eine Vorrichtung zur berührungslosen induktiven Energieübertragung für Verschiebeeinrichtungen bereitzustellen, die gegenüber den aus dem Stand der Technik bekannten Vorrichtungen eine deutlich bessere Energieübertragungseffizienz aufweist, und vorzugsweise auch zu einer Verbesserung der dynamischen Eigenschaften der Verschiebeeinrichtung beiträgt.

Diese Aufgabe wird durch eine Energieübertragungsvorrichtung gemäss Anspruch 1, eine Verschiebeeinrichtung gemäss Anspruch 14 sowie ein Verfahren gemäss Anspruch 15 gelöst. Vorteilhafte Ausführungen der Erfindung sind Gegenstand der abhängigen Ansprüche.

Die erfindungsgemässe Vorrichtung zur berührungslosen induktive Übertragung elektrischer Energie weist einen magnetischen Kreis auf, der einerseits einem dem ersten, vorzugsweise stationären System der Verschiebeeinrichtung zugeordneten Primärkern und andererseits einem dem zweiten System (relativ bewegbar zum ersten System) zugeordneten Sekundärkern umfasst, wobei auf dem Primärkern bzw. auf dem Sekundärkern eine Primärspule bzw. eine Sekundärspule aufgewickelt ist. Der Sekundärkern ist samt Sekundärspule entlang eines Verschiebeweges, der vorzugsweise parallel zu einem Verschiebeweg der Verschiebeeinrichtung verläuft, relativ zum Primärkern samt Primärspule verschiebbar angeordnet, wobei sich der Primärkern wenigstens über die gesamte Länge des Verschiebeweges des Sekundärkerns erstreckt. Der Primärkern und der Sekundärkern sind als sich gegenüberliegende E-Kerne mit quer zum Verschiebeweg des Sekundärkerns E-förmigen Querschnitten ausgebildet und das E-Profil des Primärkerns und des Sekundärkerns weisen jeweils eine Basis, einen Mittelschenkel und zwei Seitenschenkel auf, wobei die Primärspule derart um den Mittelschenkel des E-Profils des Primärkerns gewickelt ist, dass sich Windungen der Primärspule in den Längsvertiefungen zwischen dem Mittelschenkel und den zwei Seitenschenkeln des E-Profils des Primärkerns erstrecken.

Die vorliegende Erfindung zeichnet sich dadurch aus, dass der Primärkern mindestens einen Primärkernspalt umfasst, welcher in dem Mittelschenkel des E-Profils des Primärkerns über die gesamte Längserstreckung des Primärkerns hinweg ausgebildet ist und sich in Richtung der Längserstreckung des Primärkerns und über die Breite des Mittelschenkels des E-Profils des Primärkerns längs der Basis des E-Profils des Primärkerns erstreckt.

Durch den mindestens einen Primärkernspalt, einen Luftspalt im Primärkern bzw. im Mittelschenkel des Primärkerns, können die Wirbelstromverluste im Gegensatz zu den aus dem Stand der Technik bekannten Lösungen klein gehalten werden. Dies ermöglicht es, dass die Vorrichtung auch für eine Energieübertragung für Linearsysteme bzw. (lineare) Verschiebeeinrichtungen geeignet ist. Obwohl eine offene Ausführung vorliegt, verursacht die Vorrichtung nur geringe Effekte bzw. keine nachteiligen Effekte unter dem Gesichtspunkt der elektromagnetischen Verträglichkeit. Die Vorrichtung hat eine Energiedichte, die mit einer statischen Lösung - also einer nicht verschiebbaren Anordnung - vergleichbar ist. Ferner können mit Kernen (Primärkern und/oder Sekundärkern) mit Ausdehnungen im Bereich von wenigen Zentimetern sehr grosse Leistungen übertragen werden, beispielsweise Leistungen im Bereich von einigen Kilowatt.

Gemäss einer vorteilhaften Ausgestaltung ist vorgesehen, dass der Sekundärkern mindestens einen über die gesamte Längserstreckung des Sekundärkerns hinweg ausgebildeten Sekundärkernspalt umfasst. Bei einer solcherart weitergebildeten Vorrichtung ergänzen die vorteilhaften Wirkungen von Primärkernspalt und Sekundärkernspalt hinsichtlich der Wirbelstromverluste in dem Primärkern und in dem Sekundärkern.

Gemäss einer weiteren vorteilhaften Ausgestaltung ist vorgesehen, dass der mindestens eine Primärkernspalt und/oder der mindestens eine Sekundärkernspalt über die gesamte Längserstreckung des Primärkerns bzw. des Sekundärkerns kleiner gleich 0,2 mm, vorzugsweise kleiner gleich 0,1 mm ist.

Im Weiteren können die Primärspule und/oder die Sekundärspule derart ausgelegt sein, dass sie mit einem Wechselstrom von bis zu 50 A betreibbar sind. Ebenso können Primärspule und Sekundärspule im Weiteren derart ausgebildet sein, dass sie mit einer Wechselstrom-/Wechselspannungs-Frequenz zwischen 100 kHz und 500 kHz, insbesondere zwischen 200 kHz und 400 kHz, betreibbar sind.

Bei einer Betriebsfrequenz zwischen 100 kHz und 500 kHz lässt sich der Primärkernspalt und/oder der Sekundärkernspalt vorteilhaft ausnutzen, obwohl die magnetische Flussdichte verringert ist. Die magnetische Flussdichte der Anordnung liegt beispielsweise im Bereich von 0,05 T.

Gemäss einer weiteren vorteilhaften Ausgestaltung ist vorgesehen, dass der Primärkern ausschliesslich ein magnetisch leitendes Material oder ausschliesslich magnetisch leitende Materialien umfasst; dies im Unterschied zum Stand der Technik, wo der Primärkern segmentiert ist und von Füllelementen aus nicht-magnetisch leitendem Material unterbrochen ist.

In erfindungsgemässer Weise wurde erkannt, dass bei der aus dem Stand der Technik bekannten Vorrichtung ein sehr grosser Teil des Sekundärkern-Volumens, entsprechend der Ausdehnung der nicht-magnetischen Füllsegmente entlang der Verschieberichtung, für die Ausbildung des magnetischen Kreises zwischen Primär- und Sekundärseite effektiv ungenutzt bleibt. Hierdurch reduziert sich insgesamt in nachteiliger Weise die magnetische Kopplung zwischen Primär- und Sekundärseite und damit das Energieübertragungsvermögen. Zum anderen wird durch den ungenutzten Teil des Sekundärkern-Volumens die bewegte Masse in unnötiger Weise erhöht, was sich wiederum nachteilig auf die Dynamik des Verschiebesystems auswirken kann.

Im Weiteren wurde erkannt, dass auf die Minimierung der Selbstinduktion im Primärkern - wie im Stand der Technik als essentiell erachtet - zugunsten einer grösseren magnetischen Kopplung zwischen Primär- und Sekundärseite verzichtet werden kann, um eine wesentlich grössere elektrische Leistung induktiv übertragen zu können. Dadurch, dass der Primärkern gemäss der vorliegenden Erfindung ausschliesslich ein magnetisch leitendes Material bzw. ausschliesslich magnetisch leitende Materialien umfasst, also auf nicht-magnetische Füllsegmente gänzlich verzichtet wird, ist die vom magnetischen Fluss des Magnetkreises zwischen Primär- und Sekundärseite durchdrungene Querschnittsfläche im Vergleich zum Stand der Technik wenigstens doppelt so gross und damit die magnetische Kopplung und übertragbare Leistung ebenso.

Dabei muss der Primärkern nicht notwendigerweise aus einem homogenen bzw. einstückigen magnetisch-leitenden Körper bestehen, sondern kann auch beispielsweise aus mehreren, insbesondere 2, 3, 4, 5, 6, 7, 8, 9, 10 Segmenten aus jeweils einem oder mehreren magnetisch-leitenden Materialien bestehen, die etwa in Längserstreckung des Primärkerns aneinandergereiht und in unmittelbarem Kontakt miteinander angeordnet sind. Denkbar ist etwa, dass der Primärkern aus mehreren beispielsweise 20 mm langen Ferritsegmenten zusammengesetzt ist.

Selbstverständlich ist es ebenfalls von Vorteil, wenn auch der Sekundärkern ausschliesslich ein magnetisch leitendes Material oder ausschliesslich magnetisch leitende Materialien umfasst. Zudem kann der Sekundärkern ebenfalls aus einem homogenen bzw. einstückigen magnetisch-leitenden Körper bestehen oder aus mehreren Segmenten zusammengesetzt sein. Insoweit können oben beschriebene vorteilhafte Ausgestaltungen des Primärkerns in analoger Weise auch beim Sekundärkern Anwendung finden.

Gemäss einer weiteren vorteilhaften Ausgestaltung der Erfindung kann es vorgesehen sein, dass die Längserstreckung des Sekundärkerns in Richtung des Verschiebeweges im Vergleich zum Stand der Technik reduziert werden kann, um ansonsten wenigstens die gleiche elektrische Leistung vom ersten System in das zweite System übertragen zu können. Hierdurch reduziert sich in vorteilhafter Weise die bewegte Masse des zweiten Systems, was insgesamt zu einer Verbesserung der dynamischen Eigenschaften der Verschiebeeinrichtung beiträgt. So ist es denkbar, dass die Längserstreckung des Sekundärkerns in Richtung des Verschiebeweges kleiner gleich 80 mm, insbesondere kleiner gleich 40 mm, bevorzugt kleiner gleich 20 mm ist.

In jedem Fall ist aber gemäss der vorliegenden Erfindung die Längserstreckung des Sekundärkerns in Richtung des Verschiebeweges stets kürzer als die entsprechende Längserstreckung des Primärkerns, der sich - wie oben beschrieben - wenigstens über die gesamte Länge des Verschiebeweges des Sekundärkerns erstreckt.

Nach einer weiteren vorteilhaften Ausgestaltung der Erfindung kann sich der Primärkern wenigstens über die gesamte Länge des Verschiebeweges des Sekundärkerns zuzüglich wenigstens der Längserstreckung des Sekundärkerns in Richtung des Verschiebeweges des Sekundärkerns erstrecken. Damit ist gewährleistet, dass über die gesamte Länge des Verschiebeweges des Sekundärkerns die gleiche magnetische Kopplung und damit die gleiche Energieübertragungseffizienz erreicht werden kann. Von Vorteil ist der Primärkern wenigstens so lang ausgebildet und relativ zum Verschiebeweg des Sekundärkerns so angeordnet, dass der Primärkern jeweils an beiden Enden des Verschiebeweges des Sekundärkerns wenigstens um das halbe Mass, bevorzugt um das gesamte Mass der Längserstreckung des Sekundärkerns übersteht.

Um die Verschiebbarkeit des Sekundärkerns gegenüber dem Primärkern entlang des Verschiebeweges zu realisieren, sind der Primärkern und der Sekundärkern einander gegenüberliegend und über einen Luftspalt voneinander beabstandet angeordnet. Dabei kann es in vorteilhafter Weise vorgesehen sein, dass der Luftspalt insbesondere über die gesamte Länge des Verschiebeweges vorzugsweise kleiner gleich 1 mm, kleiner gleich 0,5 mm, kleiner gleich 0,2 mm, kleiner gleich 0,15 mm oder besonders bevorzugt kleiner gleich 0,1 mm ist. Insbesondere ist es von Vorteil, wenn der Luftspalt über die gesamte Länge des Verschiebeweges konstant bleibt.

Um mitunter den Luftspalt konstant über die gesamte Länge des Verschiebeweges mit hoher Präzision aufrecht erhalten zu können, kann es nach einer weiteren vorteilhaften Ausgestaltung der Erfindung vorgesehen sein, dass die Energieübertragungsvorrichtung eine Führungseinrichtung zur Führung des Sekundärkerns relativ zum Primärkern entlang des Verschiebeweges aufweist. So kann der Sekundärkern beispielsweise direkt an dem bewegbaren zweiten System der Verschiebeeinrichtung angeordnet sein und von diesem bzw. dem Führungssystem der Verschiebeeinrichtung mitgeführt werden. Alternativ oder zusätzlich ist aber auch denkbar, dass der Sekundärkern über eine separate Führungseinrichtung, beispielsweise eine Linearführung verfügt, mit der er längs des Verschiebeweges relativ zum Primärkern verschiebbar geführt wird.

Nach einer weiteren vorteilhaften Ausgestaltung der Erfindung ist die Sekundärspule derart um den Mittelschenkel des E-Profils des Sekundärkerns gewickelt, dass sich Windungen der Sekundärspule in den Längsvertiefungen zwischen dem Mittelschenkel und den zwei Seitenschenkeln des E-Profils des Sekundärkerns erstrecken, wobei der Sekundärkernspalt in dem Mittelschenkel des E-Profils des Sekundärkerns ausgebildet ist und sich in Richtung der Längserstreckung des Sekundärkerns und über die Breite des Mittelschenkels des E-Profils des Sekundärkerns längs der Basis des E-Profils des Sekundärkerns erstreckt.

Die magnetische Kopplung und damit die Energie- bzw. Leistungsübertragungseffizienz kann weiterhin gesteigert werden, wenn die Ausdehnung des Mittelschenkels des E-Kerns des Primär- bzw. Sekundärkerns längs der Basis des E-Kerns wenigstens eineinhalb, vorzugsweise wenigstens doppelt so gross ist wie die entsprechende Ausdehnung der beiden Seitenschenkel des E-Kerns. Denn hierdurch erhöht sich die vom magnetischen Fluss durchdrungene Querschnittsfläche und dadurch wiederum die magnetische Kopplung zwischen Primär- und Sekundärseite.

Besonders bevorzugt umfassen der Primärkern und/oder der Sekundärkern ein ferromagnetisches Material, insbesondere Eisen, oder ein ferrimagnetisches Material, insbesondere ein Ferrit, beispielsweise N87.

Die Primärspule und/oder die Sekundärspule können so ausgelegt sein, dass sie wenigstens 5 Windungen, insbesondere wenigstens 7 Windungen, vorzugsweise 10 Windungen aufweisen. Für die Windungen kommt insbesondere Kupferdraht in Betracht, beispielsweise ein Kupferdraht mit einem Querschnitt von 2 mm.

Entsprechend sieht ein weiterer Aspekt der vorliegenden Erfindung ein Verfahren zum Betreiben einer erfindungsgemässen Energieübertragungsvorrichtung vor, bei der die Primärspule mit einem Wechselstrom von bis zu 50 A betrieben wird. Weiterhin kann es bei dem Verfahren vorgesehen sein, dass die Primärspule mit einer Wechselstrom-/Wechselspannungs-Frequenz im Bereich zwischen 100 kHz und 500 kHz insbesondere zwischen 200 kHz und 500 kHz, betrieben wird. Insbesondere bei derartig hohen Frequenzen (etwa ab einigen kHz) bestehen der Primärkern und der Sekundärkern zweckmässigerweise aus Ferrit.

Ein noch weiterer Aspekt der vorliegenden Erfindung betrifft eine Verschiebeeinrichtung, insbesondere eine Linearverschiebeeinrichtung, mit wenigstens einer erfindungsgemässen Vorrichtung zur berührungslosen, induktiven Übertragung elektrischer Energie aus einem stationären ersten System der Verschiebeeinrichtung in ein dazu bewegbares zweites System.

Denkbar ist beispielsweise, dass die Verschiebeeinrichtung eine ein- oder mehrdimensionale bzw. eine ein- oder mehrachsige, mitunter linear geführte Verschiebeeinrichtung ist, beispielsweise ein XY-Verschiebetisch oder ein XYZ-Verschiebetisch. Bei mehrdimensionalen bzw. mehrachsigen Verschiebeeinrichtungen ist dann vorzugsweise für jede Achse eine erfindungsgemässe Energieübertragungsvorrichtung vorgesehen, um elektrische Energie etwa aus einem stationären Laborsystem stufenweise zwischen den sich relativ zueinander bewegenden Achsstufen zu übertragen. Um etwa bei einem XY-Kreuztisch einen elektrischen Verbraucher auf der obersten Y-Achsstufe mit elektrischer Energie zu versorgen, kann es vorgesehen sein, dass eine erste erfindungsgemässe Energieübertragungsvorrichtung elektrische Energie zwischen dem relativ zu einem Laborsystem stationären System der X-Achse in das bewegte System der X-Achse übertragt. Das bewegte System der X-Achse entspricht wiederum dem dazu stationären System der Y-Achse, aus dem die elektrische Energie im Weiteren über eine zweite erfindungsgemässe Energieübertragungsvorrichtung in das bewegte System der Y-Achse übertragbar ist. Dabei kann die Energieübertragung innerhalb des bewegten Systems der X-Achse bzw. innerhalb des dazu stationären Systems der Y-Achse von der Sekundärseite/-spule der ersten Energieübertragungsvorrichtung zur Primärseite/-Spule der zweiten Energieübertragungs-vorrichtung über einen elektrischen Leiter, etwa kabelgebunden erfolgen.

Weitere Einzelheiten der Erfindung und insbesondere eine beispielhafte Ausführungsform der vorgeschlagenen Vorrichtung werden im Folgenden anhand der beigefügten Zeichnung erläutert.

Es zeigen:
- Fig. 1: eine schematische Darstellung eines Ausführungsbeispiels der erfindungsgemässen Energieübertragungsvorrichtung (ohne Primär- und Sekundärspule) in einer perspektivischen Ansicht, und
- Fig. 2: einen Querschnitt durch die Energieübertragungsvorrichtung gemäss Fig. 1.

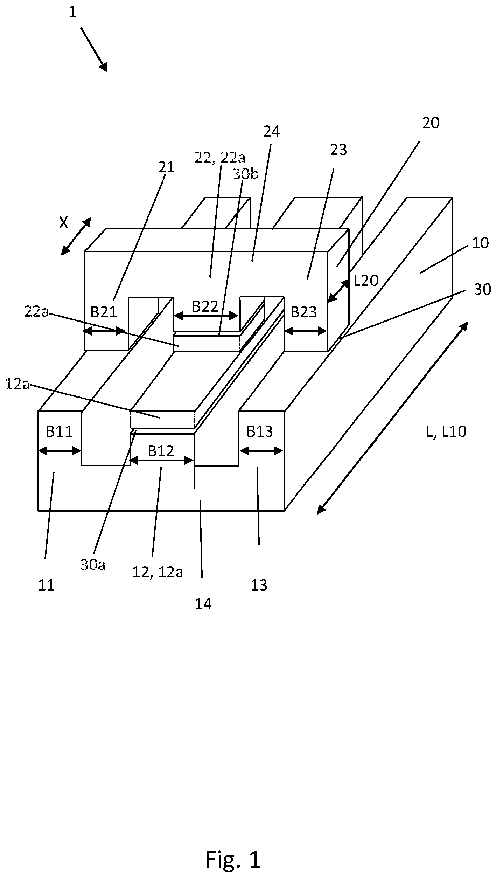

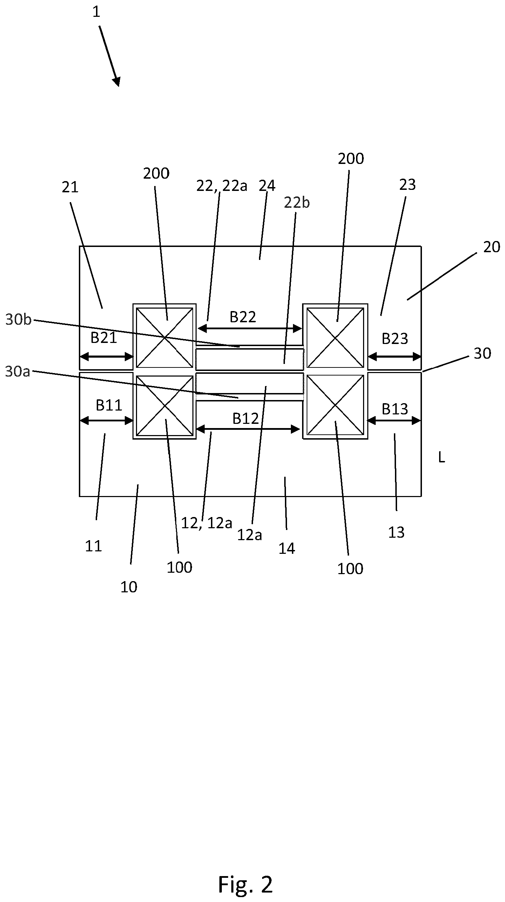

Die Fig. 1 und 2 zeigen ein mögliches Ausführungsbeispiel einer erfindungsgemässen Energieübertragungsvorrichtung 1, die dazu ausgebildet ist, um elektrische Energie induktiv aus einem ersten, vorzugsweise stationären System einer Verschiebeeinrichtung (hier nicht dargestellt) in ein dazu bewegtes zweites System der Verschiebereinrichtung berührungslos bzw. kabellos zu übertragen. Das vorliegende Ausführungsbeispiel zeigt eine lineare geführte Energieübertragungsvorrichtung 1, die im Speziellen dazu ausgebildet ist, elektrische Energie aus dem stationären in das bewegte System eine Linearführungseinrichtung zu übertragen.

Wie den Fig. 1 und 2 zu entnehmen ist, besteht die hier gezeigte Energieübertragungsvorrichtung 1 aus einem stationären Teil und einen beweglichen Teil, nämlich aus einem zum ersten System der Linearführungseinrichtung stationären Primärkern 10 und einem relativ dazu bewegbaren, dem zweiten System der Linearführungseinrichtung zugeordneten Sekundärkern 20. Konkret ist der Sekundärkern 20 im vorliegenden Ausführungsbeispiel parallel zum zweiten System der Linearführungseinrichtung entlang eines Verschiebeweges X bewegbar. Insbesondere kann er direkt an dem zweiten System, etwa einem Verschiebetisch (hier nicht gezeigt) der Linearführungseinrichtung, angeordnet sein, so dass er von dem Verschiebetisch der Linearführungseinrichtung entlang deren Verschiebeachse mitgeführt wird.

Denkbar ist aber auch, dass der Sekundärkern 20 mit einer separaten Führungseinrichtung (hier nicht gezeigt) relativ zum Primärkern 10 entlang dessen Längsachse verschoben werden kann. Hierzu kann es insbesondere vorgesehen sein, dass die separate Führungseinrichtung für den Sekundärkern eine eigene Antriebseinrichtung aufweist. Denkbar ist auch, dass der Sekundärkern 20 relativ zum Primärkern 10 nicht notwendigerweise parallel zu einem Verschiebeweg der Linearführungseinrichtung bewegbar ist. Insoweit kann der Verschiebeweg des Sekundärkerns 20 grundsätzlich gegenüber einem Verschiebeweg der Verschiebeeinrichtung bzw. Linearführungseinrichtung bezüglich Verlauf und/oder Lage abweichen. Der Verlauf des Verschiebeweges X des Sekundärkerns 20 korrespondiert jedoch stets im Wesentlichen mit dem Verlauf der Längsachse des Primärkerns 10. Bevorzugt verläuft der Verschiebeweg X des Sekundärkerns 20 jedoch parallel zum Verschiebeweg der Verschiebeeinrichtung bzw. Linearführungseinrichtung.

Auf dem Primärkern 10 ist eine Primärspule 100 (in Fig. 1 nicht gezeigt) und auf dem Sekundärkern 20 eine Sekundärspule 200 aufgewickelt. Sowohl die Primärspule 100 als auch die Sekundärspule 200 sind durch das Aufwickeln auf den Primärkern 10 bzw. den Sekundärkern 20 mit ihrem jeweiligen Kern fest verbunden. D.h. die Primärspule 100 bzw. Sekundärspule 200 bewegen sich relativ zu ihrem jeweiligen Kern nicht.

Wie den Fig. 1 und 2 ferner zu entnehmen ist, sind der Primärkern 10 und der Sekundärkern 20 im vorliegenden Ausführungsbeispiel jeweils als sogenannte E-Kerne ausgebildet, die quer zum Verschiebeweg X des Sekundärkerns 20 E-förmige Querschnitte aufweisen. Soweit weist das E-Profil von Primärkern 10 und Sekundärkern 20 jeweils eine Basis 14, 24, einen Mittelschenkel 12, 22 sowie je 2 Seitenschenkel 11, 13; 21, 23 auf. Wie in den Fig. 1 und 2 gezeigt, sind der Primärkern 10 und der Sekundärkern 20 jeweils mit den offenen Seiten des E-Profils einander zugewandt angeordnet (d.h. die Basen 14, 24 der beiden E-Kerne sind einander abgewandt), so dass die jeweils korrespondierenden Seitenschenkel 11, 21 bzw. 13, 21 sowie die Mittelschenkel 12, 22 des Primär- und Sekundärkerns 10, 20 einander deckungsgleich gegenüberliegen.

Wie insbesondere in Fig. 2 zu erkennen ist, sind die Primärspule 100 und die Sekundärspule 200 jeweils um den Mittelschenkel 12, 22 des Primärkerns 10 bzw. Sekundärkerns 20 gewickelt, so dass die Windungen der beiden Spulen jeweils in den Längsvertiefungen zwischen den Seitenschenkeln 11, 13; 21, 23 und den Mittelschenkeln 12, 22 verlaufen und jeweils stirnseitig an den Enden des Primärkerns 10 bzw. des Sekundärkerns 20 (in die jeweils andere Längsvertiefung auf der gegenüberliegenden Seite des Mittelschenkels) "umkehren".

Vorzugsweise bestehen die Wicklungen der Primärspule 100 und der Sekundärspule 200 aus Kupferdraht, beispielsweise aus einem Kupferdraht von etwa 2 mm Durchmesser. Bevorzugt sind die Primärspule 100 und die Sekundärspule 200 derart ausgelegt, dass sie mit einem Strom von bis zu 50 A betrieben werden können. Vorzugsweise weist die Primärspule 10 und/oder die Sekundärspule 20 wenigstens 5 Windungen, insbesondere wenigstens 7 Windungen, vorzugsweise jedoch 10 Windungen auf, um ein ausreichend hohes Magnetfeld erzeugen zu können.

Um elektrische Energie über den gesamten Verschiebeweg der Verschiebeeinrichtung bzw. der Linearführungseinrichtung in das bewegte, zweite System übertragen zu können, erstreckt sich der Primärkern 10 wenigstens über die gesamte Länge L des Verschiebeweges X des Sekundärkerns 20. Bevorzugt erstreckt sich jedoch der Primärkern wenigstens über die gesamte Länge L des Verschiebeweges X zuzüglich der Längserstreckung L20 des Sekundärkerns 20 in Richtung des Verschiebeweges X. Wie aus Fig. 1 ersichtlich ist, ist damit die Längserstreckung des Primärkerns 10 stets grösser, in aller Regel wesentlich grösser als die Längserstreckung L20 des Sekundärkerns 20. Entsprechend ist auch die Primärspule 100 gegenüber der Sekundärspule 200 deutlich länger bzw. in die Länge gezogen ausgebildet, da sich die Wicklungen der Primärspule 100 über die gesamte Länge des Primärkerns 10 erstrecken.

Um die bewegte Masse der Energieübertragungsvorrichtung 1 möglichst gering zu halten, ist die Längserstreckung L20 des Sekundärkerns 20 in Richtung des Verschiebeweges X kleiner gleich 80 mm, insbesondere kleiner gleich 40 mm, besonders bevorzugt kleiner gleich 20 mm. Zum Vergleich beträgt die Breite des Primärkerns 10 bzw. des Sekundärkerns 20, d.h. die Ausdehnung beider Kerne guer/senkrecht zum Verschiebeweg X, im vorliegenden Ausführungsbeispiel etwa 65 mm.

Der Primärkern 10 kann beispielsweise ausschliesslich ein magnetisch leitendes Material oder ausschliesslich magnetisch leitende Materialien umfassen, im Gegensatz zum Stand der Technik, gemäss dem der Primärkern von nicht-magnetischen Füllsegmenten periodisch unterbrochen ist. Auch der Sekundärkern 20 kann ausschliesslich aus magnetisch leitenden Material bzw. ausschliesslich aus magnetisch leitenden Materialien bestehen. Im Weiteren kann es vorgesehen sein, dass der Primärkern 10 und/oder der Sekundärkern 20 entweder einstückig ausgebildet oder aus mehreren Teilsegmenten aufgebaut ist, die in unmittelbarem Kontakt miteinander stehen.

Besonders bevorzugt umfasst der Primärkern 10 und/oder der Sekundärkern 20 ein ferromagnetisches Material, insbesondere Eisen, oder ein ferrimagnetisches Material auf, insbesondere ein Ferrit, beispielsweise N87.

Um die magnetische Kopplung zwischen Primär- und Sekundärseite der Energieübertragungsvorrichtung 1, d.h. zwischen dem Primärkern 10 und dem Sekundärkern 20 zu erhöhen, ist es bei der Energieübertragungsvorrichtung 1 gemäss dem vorliegenden Ausführungsbeispiel vorgesehen, dass die Ausdehnung (Breite) B12, B22 des Mittelschenkels 12, 22 des E-förmigen Primär- bzw. Sekundärkerns 10, 20 längs der jeweiligen Basis 14, 24 des E-Kerns wenigstens doppelt so gross ist wie die entsprechende Ausdehnung (Breite) B11, B13; B21, B23 der beiden Seitenschenkel 11, 13; 21, 23 des jeweiligen E-Kerns.

Aufgrund der Verschiebbarkeit des Sekundärkerns 20 gegenüber dem Primärkern 10 ist notwendigerweise ein Luftspalt 30 zwischen beiden Kernen 10, 20 vorgesehen. Um dennoch die magnetische Kopplung ausreichend gross zu halten, ist es bei der Energieübertragungsvorrichtung 1 gemäss dem vorliegenden Ausführungsbeispiel vorgesehen, dass der Luftspalt 30 über die gesamte Länge L des Verschiebewegs X vorzugsweise kleiner als 0,5 mm, besonders bevorzugt etwa 0,1 mm ist. Um diesen Luftspalt konstant aufrecht zu halten, ist der Sekundärkern 20 bevorzugt möglichst stabil entlang des gesamten Verschiebeweges X geführt. Es versteht sich von selbst, dass die sich gegenüberliegenden Oberflächen von Primärkern 10 und Sekundärkern 20 entsprechend eben ausgebildet sind, um einen Luftspalt 30 in der oben diskutierten Grössenordnung konstant über den gesamten Verschiebeweg X aufrecht erhalten zu können.

Zusätzlich zu dem Luftspalt 30, der zwischen den relativ zueinander verschiebbaren Teilen, dem Primärkern 10 und dem Sekundärkern 20, vorhanden ist, weist gemäss dem dargestellten Ausführungsbeispiel der Primärkern 10 einen Primärkernspalt 30a auf. Im dargestellten Ausführungsbeispiel weist ausserdem der Sekundärkern 20 einen Sekundärkernspalt 30b auf.

Der Primärkernspalt 30a bzw. der Sekundärkernspalt 30b sind gemäss dem Ausführungsbeispiel jeweils in dem Mittelschenkel 12, 22 ausgebildet. Beispielsweise wird der Mittelschenkel 12 des Primärkerns 10 in einen ersten Mittelschenkel-Teil 12a und einen zweiten Mittelschenkel-Teil 12b unterteilt. Die beiden Teile 12a, 12b sind durch ein geeignetes Stützmaterial miteinander verbunden.

Die gesamte Energieübertragungsvorrichtung 1, insbesondere die Primärspule 100 und/oder die Sekundärspule 200, ist ferner derart ausgebildet, dass sie mit einer Wechselstrom-/Wechselspannungs-Frequenz im Bereich zwischen 100 kHz und 500 kHz, insbesondere zwischen 200kHz und 450 kHz, betreibbar ist.

Zusätzlich zu dem Luftspalt 30 zwischen den beweglichen Teilen sind gemäss dem dargestellten Ausführungsbeispiel demnach weitere Luftspalte 30a, 30b in zumindest einem der Schenkel des Primärkerns 10 bzw. des Sekundärkerns 20 vorgesehen, die eine geringe Spaltweite von weniger als 0,2 mm oder weniger als 0,1 mm haben. Der Primärkernspalt 30a bzw. der Sekundärkernspalt 30b ist jeweils über die gesamte jeweilige Längserstreckung L10, L20 vorgesehen. Obwohl dieses Übertragungssystem in offener Bauweise ausgeführt ist und bei Frequenzen grösser gleich 100 kHz betrieben wird, werden nur geringe bzw. keine relevanten Störungen hinsichtlich der elektromagnetischen Verträglichkeit erzeugt. Es hat eine vergleichbare Energiedichte wie ein statisch ausgebildetes System und ermöglicht beispielsweise eine Übertragung von Leistungen im Kilowatt-Bereich.

## Patentansprüche

1. Vorrichtung (1) zur berührungslosen induktiven Übertragung elektrischer Energie aus einem ersten, vorzugsweise stationären System einer Verschiebeeinrichtung in ein dazu bewegbares zweites System der Verschiebeeinrichtung, mit einem magnetischen Kreis aus einem dem ersten System zugordneten Primärkern (10), auf dem eine Primärspule (100) aufgewickelt ist, und einem dem zweiten System zugeordneten Sekundärkern (20), auf dem eine Sekundärspule (200) aufgewickelt ist, wobei der Sekundärkern (20) relativ zum Primärkern (10) entlang eines Verschiebeweges (X), der vorzugsweise parallel zu einem Verschiebeweg der Verschiebeeinrichtung verläuft, verschiebbar angeordnet ist und wobei sich der Primärkern (10) wenigstens über die gesamte Länge (L) des Verschiebeweges erstreckt,
wobei der Primärkern (10) und der Sekundärkern (20) als sich gegenüberliegende E-Kerne mit quer zum Verschiebeweg (X) des Sekundärkerns (20) E-förmigen Querschnitten ausgebildet sind und das E-Profil des Primärkerns (10) und des Sekundärkerns (20) jeweils eine Basis (14, 24), einen Mittelschenkel (12, 22) und zwei Seitenschenkel (11, 13; 21, 23) aufweist,
wobei die Primärspule (100) derart um den Mittelschenkel (12) des E-Profils des Primärkerns (10) gewickelt ist, dass sich Windungen der Primärspule (100) in den Längsvertiefungen zwischen dem Mittelschenkel (12) und den zwei Seitenschenkeln (11, 13) des E-Profils des Primärkerns (10) erstrecken,
**dadurch gekennzeichnet, dass** mindestens ein Primärkernspalt (30a) in dem Mittelschenkel (12) des E-Profils des Primärkerns (10) über die gesamte Längserstreckung (L10) des Primärkerns (10) hinweg ausgebildet ist und sich in Richtung der Längserstreckung des Primärkerns (10) und über die Breite (B12) des Mittelschenkels (12) des E-Profils des Primärkerns (10) längs der Basis (14) des E-Profils des Primärkerns (10) erstreckt.

2. Vorrichtung (1) nach Anspruch 1, **dadurch gekennzeichnet, dass** der Sekundärkern (20) mindestens einen über die gesamte Längserstreckung (L20) des Sekundärkerns (20) hinweg ausgebildeten Sekundärkernspalt (30b) umfasst.

3. Vorrichtung (1) nach Anspruch 2, **dadurch gekennzeichnet, dass** der mindestens eine Primärkernspalt (30a) und/oder der mindestens eine Sekundärkernspalt (30b) über die gesamte Längserstreckung (L10) des Primärkerns (10) bzw. die gesamte Längserstreckung (L20) des Sekundärkerns (20) kleiner gleich 0,2 mm, vorzugsweise kleiner gleich 0,1 mm ist.

4. Vorrichtung (1) nach einem der vorhergehenden Ansprüche, **dadurch gekennzeichnet, dass** die Primärspule (100) und/oder die Sekundärspule (200) derart ausgelegt sind, dass sie mit einem Wechselstrom von bis 50 A und/oder mit einer Wechselstrom-/Wechselspannungs-Frequenz im Bereich zwischen 100 kHz und 500 kHz, insbesondere zwischen 200kHz und 450 kHz, betreibbar ist.

5. Vorrichtung (1) nach einem der vorhergehenden Ansprüche, **dadurch gekennzeichnet, dass** der Primärkern (10) ausschliesslich ein magnetisch leitendes Material oder ausschliesslich magnetisch leitende Materialen umfasst.

6. Vorrichtung (1) nach Anspruch 1, **dadurch gekennzeichnet, dass** die Längserstreckung (L20) des Sekundärkerns (20) in Richtung des Verschiebewegs (X) kleiner gleich 80 mm, kleiner gleich als 40 mm oder kleiner gleich 20 mm ist.

7. Vorrichtung (1) nach einem der vorhergehenden Ansprüche, **dadurch gekennzeichnet, dass** sich der Primärkern (10) wenigstens über die gesamte Länge (L) des Verschiebeweges (X) zuzüglich der Längserstreckung (L20) des Sekundärkerns (20) in Richtung des Verschiebewegs (X) erstreckt.

8. Vorrichtung (1) nach einem der vorhergehenden Ansprüche, **dadurch gekennzeichnet, dass** der Primärkern (10) und der Sekundärkern (20) einander gegenüberliegend und über einen Luftspalt (30) voneinander beabstandet angeordnet sind, wobei der Luftspalt (30) insbesondere über die gesamte Länge (L) des Verschiebewegs vorzugsweise kleiner gleich 1 mm, kleiner gleich 0,5 mm, kleiner gleich 0,2 mm, kleiner gleich 0,15 mm oder kleiner gleich 0,1 mm ist.

9. Vorrichtung (1) nach Anspruch 2 oder 3, **dadurch gekennzeichnet, dass** die Sekundärspule (200) derart um den Mittelschenkel (22) des E-Profils des Sekundärkerns (20) gewickelt ist, dass sich Windungen der Sekundärspule (200) in den Längsvertiefungen zwischen dem Mittelschenkel (22) und den zwei Seitenschenkeln (21, 23) des E-Profils des Sekundärkerns (20) erstrecken,
wobei der Sekundärkernspalt (30b) in dem Mittelschenkel (22) des E-Profils des Sekundärkerns (20) ausgebildet ist und sich in Richtung der Längserstreckung des Sekundärkerns (20) und über die Breite (B22) des Mittelschenkels (22) des E-Profils des Sekundärkerns (20) längs der Basis (24) des E-Profils des Sekundärkerns (20) erstreckt.

10. Vorrichtung (1) nach Anspruch 8, **dadurch gekennzeichnet, dass** die Ausdehnung (B12, B22) des Mittelschenkels (12, 22) des E-Kerns des Primär- bzw. Sekundärkerns (10, 20) längs der Basis (14, 24) des E-Kerns wenigstens eineinhalbmal, vorzugsweise wenigstens doppelt so gross ist wie die entsprechende Ausdehnung (B11, B13; B21, B23) der beiden Seitenschenkel (11, 13; 21, 23) des E-Kerns.

11. Vorrichtung (1) nach einem der vorhergehenden Ansprüche, **dadurch gekennzeichnet, dass** der Primärkern (10) und/oder der Sekundärkern (20) ein ferromagnetisches Material, insbesondere Eisen, oder ein ferrimagnetisches Material, insbesondere ein Ferrit, umfasst.

12. Vorrichtung (1) nach einem der vorhergehenden Ansprüche, **dadurch gekennzeichnet, dass** die Vorrichtung (1) eine Führungseinrichtung zur Führung des Sekundärkerns (20) relativ zum Primärkern (10) entlang des Verschiebeweges (X) aufweist.

13. Vorrichtung (1) nach einem der vorhergehenden Ansprüche, **dadurch gekennzeichnet, dass** die Primärspule (100) und/oder die Sekundärspule (200) wenigstens 5 Windungen, insbesondere wenigstens 7 Windungen, vorzugsweise 10 Windungen aufweist.

14. Verschiebeeinrichtung, insbesondere Linear-Verschiebeeinrichtung, mit wenigstens einer Vorrichtung (1) zur berührungslosen, induktiven Übertragung elektrischer Energie nach einem der vorhergehenden Ansprüche, wobei die Verschiebeeinrichtung ein stationäres System und ein dazu bewegbares zweites System aufweist.

15. Verfahren zum Betreiben einer Vorrichtung (1) zur berührungslosen, induktiven Übertragung elektrischer Energie nach einem der vorhergehenden Ansprüche, wobei die Primärspule (100) mit einem Wechselstrom von bis 50 A betreiben wird und/oder wobei die Primärspule (100) mit einer Wechselstrom-/Wechselspannungs-Frequenz im Bereich zwischen 100 kHz und 500 kHz, insbesondere zwischen 200kHz und 450 kHz, betrieben wird.

## Claims

1. A device (1) for the contact-free inductive transfer of electrical energy from a first, preferably stationary system of a shifting device into a second system of the shifting device, which can be moved relative to the first system, comprising a magnetic circuit of a primary core (10), which is assigned to the first system and onto which a primary coil (100) is wound, and a secondary core (20), which is assigned to the second system and onto which a secondary coil (200) is wound, wherein the secondary core (20) is arranged so as to be capable of being shifted relative to the primary core (10) along a shifting path (X), which preferably runs parallel to a shifting path of the shifting device, and wherein the primary core (10) extends at least along the entire length (L) of the shifting path,
wherein the primary core (10) and the secondary core (20) are embodied as E cores located opposite one another comprising E-shaped cross sections at right angles to the shifting path (X) of the secondary core (20), and the E-profile of the primary core (10) and of the secondary core (20) each has a base (14, 24), a center leg (12, 22), and two side legs (11, 13; 21, 23),
wherein the primary coil (100) is wound around the center leg (12) of the E-profile of the primary core (10) in such a way that windings of the primary coil (100) run in the longitudinal depressions between the center leg (12) and the two side legs (11, 13) of the E-profile of the primary core (10),
**characterized in that** at least one primary core gap (30a) is embodied in the center leg (12) of the E-profile of the primary core (10) along the entire longitudinal extension (L10) of the primary core (10) and runs in the direction of the longitudinal extension of the primary core (10) and along the base (14) of the E-profile of the primary core (10) over the width (B12) of the center leg (12) of the E-profile of the primary core (10).

2. The device (1) according to claim 1, **characterized in that** the secondary core (20) comprises at least one secondary core gap (30b), which is embodied along the entire longitudinal extension (L20) of the secondary core (20) .

3. The device (1) according to claim 2, **characterized in that** the at least one primary core gap (30a) and/or the at least one secondary core gap (30b) is less than or equal to 0.2 mm, preferably less than or equal to 0.1 mm, along the entire longitudinal extension (L10) of the primary core (10) or the entire longitudinal extension (L20) of the secondary core (20), respectively.

4. The device (1) according to one of the preceding claims, **characterized in that** the primary coil (100) and/or the secondary coil (200) are designed in such a way that they can be operated with an alternating current of up to 50 A and/or with an alternating current/alternating voltage frequency in the range of between 100 kHz and 500 kHz, in particular between 200 kHz and 450 kHz.

5. The device (1) according to one of the preceding claims, **characterized in that** the primary core (10) exclusively comprises a magnetically conducting material or exclusively magnetically conducting materials.

6. The device (1) according to claim 1, **characterized in that** the longitudinal extension (L20) of the secondary core (20) in the direction of the shifting path (X) is smaller than or equal to 80 mm, smaller than or equal to 40 mm or smaller than or equal to 20 mm.

7. The device (1) according to one of the preceding claims, **characterized in that** the primary core (10) extends at least along the entire length (L) of the shifting path (X) plus the longitudinal extension (L20) of the secondary core (20) in the direction of the shifting path (X).

8. The device (1) according to one of the preceding claims, **characterized in that** the primary core (10) and the secondary core (20) are arranged so as to be located opposite one another and so as to be spaced apart from one another via an air gap (30), wherein the air gap (30) is preferably less than or equal to 1 mm, less than or equal to 0.5 mm, less than or equal to 0.2 mm, less than or equal to 0.15 mm or less than or equal to 0.1 mm in particular along the entire length (L) of the shifting path.

9. The device (1) according to claim 2 or 3, **characterized in that** the secondary coil (200) is wound around the center leg of the E-profile of the secondary core (20) in such a way that windings of the secondary coil (200) run in the longitudinal depressions between the center leg (22) and the two side legs (21, 23) of the E-profile of the secondary core (20), wherein the secondary core gap (30b) is embodied in the center leg (22) of the E-profile of the secondary core (20) and runs in the direction of the longitudinal extension of the secondary core (20) and along the base (24) of the E-profile of the secondary core (20) over the width (B22) of the center leg (22) of the E-profile of the secondary core (20).

10. The device (1) according to claim 8, **characterized in that** the extension (B12, B22) of the center leg (12, 22) of the E core of the primary or secondary core (10, 20), respectively, along the base (14, 24) of the E core is at least one and a half times, preferably at least twice as large as the corresponding extension (B11, B13; B21, B23) of the two side legs (11, 13; 21, 23) of the E core.

11. The device (1) according to one of the preceding claims, **characterized in that** the primary core (10) and/or the secondary core (20) comprises a ferromagnetic material, in particular iron, or a ferrimagnetic material, in particular a ferrite.

12. The device (1) according to one of the preceding claims, **characterized in that** the device (1) has a guide device for guiding the secondary core (20) relative to the primary core (10) along the shifting path (X).

13. The device (1) according to one of the preceding claims, **characterized in that** the primary coil (100) and/or the secondary coil (200) has at least 5 windings, in particular at least 7 windings, preferably 10 windings.

14. A shifting device, in particular linear shifting device, comprising at least one device (1) for the contact-free, inductive transfer of electrical energy according to one of the preceding claims, wherein the shifting device has a stationary system and a second system, which can be moved relative to the stationary system.

15. A method for operating a device (1) for the contact-free, inductive transfer of electrical energy according to one of the preceding claims, wherein the primary coil (100) is operated with an alternating current of up to 50 A and/or wherein the primary coil (100) is operated with an alternating current/alternating voltage frequency in the range of between 100 kHz and 500 kHz, in particular between 200 kHz and 450 kHz.

## Revendications

1. Dispositif (1) de transmission inductive sans contact d'énergie électrique depuis un premier système de préférence stationnaire d'un dispositif de déplacement dans un second système mobile du dispositif de déplacement, comportant un circuit magnétique composé d'un noyau primaire (10) associé au premier système et sur lequel une bobine primaire (100) est enroulée, et d'un noyau secondaire (20) associé au second système et sur laquelle une bobine secondaire (200) est enroulée, le noyau secondaire (20) étant disposé de manière à être déplaçable par rapport au noyau primaire (10) le long d'un parcours de déplacement (X) qui s'étend de préférence parallèlement à un parcours de déplacement du dispositif de déplacement et le noyau primaire (10) s'étendant au moins sur toute la longueur (L) du parcours de déplacement,
le noyau primaire (10) et le noyau secondaire (20) étant réalisés sous forme de noyaux en E opposés dotés de sections transversales en forme de E transversalement au parcours de déplacement (X) du noyau secondaire (20) et le profilé en E du noyau primaire (10) et du noyau secondaire présentant respectivement une base (14, 24), une branche centrale (12, 22) et deux branches latérales (11, 13 ; 21, 23),
la bobine primaire (100) étant enroulée autour de la branche centrale (12) du profilé en E du noyau primaire (10) de manière à ce que des spires de la bobine primaire (100) s'étendent dans les creux allongés entre la branche centrale (12) et les deux branches latérales (11, 13) du profilé en E du noyau primaire (10),
**caractérisé en ce qu'**au moins un intervalle de noyau primaire (30a) est constitué dans la branche centrale (12) du profilé en E du noyau primaire (10) sur toute l'extension longitudinale (L10) du noyau primaire (10) et s'étend en direction de l'extension longitudinale du noyau primaire (10) et sur la largeur (B12) de la branche centrale (12) du profilé en E du noyau primaire (10) le long de la base (14) du profilé en E du noyau primaire (10).

2. Dispositif (1) selon la revendication 1, **caractérisé en ce que** le noyau secondaire (20) comprend au moins un intervalle de noyau secondaire (30b) réalisé sur toute l'extension longitudinale (L20) du noyau secondaire (20) .

3. Dispositif (1) selon la revendication 2, **caractérisé en ce que** l'au moins un intervalle de noyau primaire (30a) et/ou l'au moins un intervalle de noyau secondaire (30b), sur toute l'extension longitudinale (L10) du noyau primaire (10) ou toute l'extension longitudinale (L20) du noyau secondaire (20), est de préférence inférieur ou égal à 0,2 mm, de préférence inférieur ou égal à 0,1 mm.

4. Dispositif (1) selon une des revendications précédentes, **caractérisé en ce que** la bobine primaire (100) et/ou la bobine secondaire (200) sont conçues de manière à pouvoir fonctionner avec un courant alternatif de jusqu'à 50 A et/ou avec une fréquence courant alternatif/tension alternative de l'ordre de 100 kHz à 500 kHz, en particulier 200 kHz à 450 kHz.

5. Dispositif (1) selon une des revendications précédentes, **caractérisé en ce que** le noyau primaire (10) comprend exclusivement un matériau conducteur magnétique ou exclusivement des matériaux conducteurs magnétiques.

6. Dispositif (1) selon la revendication 1, **caractérisé en ce que** l'extension longitudinale (L20) du noyau secondaire (20), en direction du parcours de déplacement (X), est inférieure ou égale à 80 mm, inférieure ou égale à 40 mm ou inférieure ou égale à 20 mm.

7. Dispositif (1) selon une des revendications précédentes, **caractérisé en ce que** le noyau primaire (10) s'étend sur toute la longueur (L) du parcours de déplacement (X) en plus de l'extension longitudinale (L20) du noyau secondaire (20) en direction du parcours de déplacement (X).

8. Dispositif (1) selon une des revendications précédentes, **caractérisé en ce que** le noyau primaire (10) et le noyau secondaire (20) sont disposés à l'opposé l'un de l'autre et espacés l'un de l'autre par un interstice d'air (30), l'interstice d'air (30) étant en particulier, sur toute la longueur (L) du parcours de déplacement, de préférence inférieur ou égal à 1 mm, inférieur ou égal à 0,5 mm, inférieur ou égal à 0,2 mm, inférieur ou égal à 0,15 mm ou inférieur ou égal à 0,1 mm.

9. Dispositif (1) selon la revendication 2 ou 3, **caractérisé en ce que** la bobine secondaire (200) est enroulée autour de la branche centrale (22) du profilé en E du noyau secondaire (20) de manière à ce que des spires de la bobine secondaire (200) s'étendent dans les creux allongés entre la branche centrale (22) et les deux branches latérales (21,23) du profilé en E du noyau secondaire (20),
l'intervalle de noyau secondaire (30b) étant réalisé dans la branche centrale (22) du profilé en E du noyau secondaire (20) et s'étendant en direction de l'extension longitudinale du noyau secondaire (20) et sur la largeur (B22) de la branche centrale (22) du profilé en E du noyau secondaire (20) le long de la base (24) du profilé en E du noyau secondaire (20).

10. Dispositif (1) selon la revendication 8, **caractérisé en ce que** l'extension (B12, B22) de la branche centrale (12, 22) du noyau en E du noyau primaire ou secondaire (10, 20) le long de la base (14, 24) du noyau en E représente au moins une fois et demie, de préférence au moins le double de l'extension correspondante (B11, B13 ; B21, B23) des deux branches latérales (11, 13 ; 21, 23) du noyau en E.

11. Dispositif (1) selon une des revendications précédentes, **caractérisé en ce que** le noyau primaire (10) et/ou le noyau secondaire (20) comprend un matériau ferromagnétique, en particulier du fer, ou un matériau ferrimagnétique, en particulier une ferrite.

12. Dispositif (1) selon une des revendications précédentes, **caractérisé en ce que** le dispositif (1) présente un dispositif de guidage pour le guidage du noyau secondaire (20) par rapport au noyau primaire (10) le long du parcours de déplacement (X).

13. Dispositif (1) selon une des revendications précédentes, **caractérisé en ce que** la bobine primaire (100) et/ou la bobine secondaire (200) présente au moins 5 spires, en particulier au moins 7 spires, de préférence 10 spires.

14. Dispositif de déplacement, en particulier dispositif de déplacement linéaire, comportant au moins un dispositif (1) pour la transmission inductive sans contact d'énergie électrique selon une des revendications précédentes, le dispositif de déplacement présentant un système stationnaire et un second système mobile par rapport à celui-ci.

15. Procédé d'utilisation d'un dispositif (1) de transmission inductive sans contact d'énergie électrique selon une des revendications précédentes, la bobine primaire (100) fonctionnant avec un courant alternatif de jusqu'à 50 A et/ou la bobine primaire (100) fonctionnant avec une fréquence courant alternatif/tension alternative de l'ordre de 100 kHz à 500 kHz, en particulier 200 kHz à 450 kHz.
